# EUROPEAN PATENT APPLICATION

(11) **EP 4 683 206 A1**
(43) Date of publication of application: **21.01.2026**
(21) Application number: 25189706.2
(22) Date of filing: 15.07.2025
(51) Int. Cl.: H02P 6/15

(54) **MOTOR DRIVE CONTROL SCHEME FOR REDUCING NEGATIVE CURRENTS**

(30) Priority: 17.07.2024 US 202418775144
(71) Applicant: Black & Decker Inc., New Britain, CT 06053 (US)
(72) Inventor: Ma, Bin, Pizhou City, Jiangsu 221327 (CN); Lin, Wing W., Bel Air, Maryland 21015 (US); Tian, Yue, Suzhou, Jiangsu 215008 (CN); Ekstrom, Erik A., York, Pennsylvania 17403 (US)
(74) Representative: Slingsby Partners LLP

(57) **Abstract**

A tool is provided including a motor powered by a battery, a power switch circuit, and a controller that controls the power switch circuit using a multi-phase trapezoidal commutation scheme including at least six commutation sectors for each rotation of the motor. The power switch circuit includes high-side power switches and low-side power switches configured as an inverter circuit. Within at least one phase of the motor that includes a first sector and a second sector driven by pulse-width modulation (PWM) control, a dissipation current path is provided through at least two of the high-side or two of the low-side power switches, for a current dissipation period that starts immediately after a motor commutation from the first sector to the second sector, for dissipation of the motor current associated with the first sector to avoid negative flow of motor current into the bus line.

## Description

### FIELD

This application relates to a commutation scheme in a power tool, and in particular to a commutation control scheme that reduces negative currents in a power tool.

### BACKGROUND

Power tools, such as drills, saws, and grinders, are widely used in various industries and applications. These tools typically incorporate electric motors to provide the necessary mechanical power. Brushless DC (BLDC) motor have been commonly used in recent year in the field of power tools.

In a typical BLDC motor control scheme, a six-step trapezoidal drive is commonly employed. This scheme involves sequentially energizing the motor's three phases to generate a rotating magnetic field, resulting in the desired motor rotation. However, a drawback of this control scheme is the occurrence of adverse currents during specific commutation sequences, which can have detrimental effects on the MOSFETs within the inverter circuit.

The adverse currents, flowing back into the DC bus line, can cause MOSFET failure, leading to reduced motor performance, increased maintenance costs, and potential safety hazards. Traditionally, hardware solutions have been implemented to mitigate these adverse effects. These solutions involve increasing the size or rating of the bus capacitor and selecting higher voltage and power rated MOSFETs. However, these approaches often result in increased costs and larger control modules, which may not be desirable for compact power tools or cost-sensitive applications.

### SUMMARY

According to an embodiment, a tool is provided including: a motor; a battery interface configured to make an electric connection from a battery; a power switch circuit disposed between the battery interface and the motor to supply electric power from the battery to the motor; and a controller that controls the power switch circuit to drive the motor using a multi-phase trapezoidal commutation scheme including at least six commutation sectors for each rotation of the motor. The power switch circuit includes high-side power switches and low-side power switches configured as an inverter circuit. In an embodiment, within at least one phase of the motor that includes a first sector and a second sector and in which the controller controls a pulse-width modulation (PWM) of a first high-side power switch, a dissipation current path is provided through at least two of the high-side power switches or two of the low-side power switches, for a current dissipation period that starts immediately after a motor commutation from the first sector to the second sector, for dissipation of the motor current associated with the first sector to avoid negative flow of motor current into the bus line.

In an embodiment, the current dissipation path is provided through two of the low-side power switches.

In an embodiment, the controller is configured to extend a drive signal of a low-side power switch that is actively driven during the first sector into the second sector for the duration of the current dissipation period.

In an embodiment, the controller is configured to increase a conduction band of a low-side power switch that is actively driven during the first sector, so it overlaps with the second sector for the duration of the current dissipation period.

In an embodiment, the controller is configured to continue the PWM control of the first high-side power switch to energize the motor via current from the battery concurrent with the current dissipation period.

In an embodiment, the controller is configured to temporarily pause the PWM control of the first high-side power switch for the duration of the current dissipation period and resume the PWM control within the second sector after an expiration of the current dissipation period.

In an embodiment, the controller is configured to activate a drive signal of a low-side power switch that is associated with the second sector after the expiration of the current dissipation period.

In an embodiment, the current dissipation path is provided through two of the high-side power switches.

In an embodiment, the controller is configured to extend an ON-cycle of one of first high-side power switch for the duration of the current dissipation period.

In an embodiment, the controller is configured to temporarily set a PWM duty cycle of the first high-side power switch to 100% for the duration of the current dissipation period, and to resume normal control of the PWM duty cycle after an expiration of the current dissipation period.

In an embodiment, the controller is configured to measure a current passing between the battery and the power switch circuit and set the current dissipation period as a function of the measured current.

In an embodiment, a method of controlling a tool having a motor powered by a battery, a controller, and a power switch circuit that supplies electric power from the battery to the motor is provided. The power switch circuit includes high-side power switches and low-side power switches configured as an inverter circuit. The method includes: controlling the power switch circuit to drive the motor using a multi-phase trapezoidal commutation scheme including at least six commutation sectors for each rotation of the motor; and controlling the power switch circuit to provide a dissipation current path, within at least one phase of the motor that includes a first sector and a second sector and in which a first high-side power switch is activated via a pulse-width modulation (PWM) control, through at least two of the high-side power switches or two of the low-side power switches, for a current dissipation period that starts immediately after a motor commutation from the first sector to the second sector, for dissipation of the motor current associated with the first sector to avoid negative flow of motor current into the bus line.

In an embodiment, the method can execute one or more additional feature recited in the preceding paragraphs.

### DRAWINGS

The various advantages of the embodiments will become apparent to one skilled in the art by reading the following specification and appended claims, and by referencing the following drawings, in which:
FIG. 1 depicts an exemplary power tool, in this example an angle grinder, according to an embodiment.
FIG. 2 depicts a perspective view of the brushless DC (BLDC) motor, according to an embodiment.
FIG. 3 depicts a cross-sectional view of the motor, according to an embodiment.
FIG. 4 depicts an exemplary block circuit diagram of the power tool components, including a motor control and power module, according to an embodiment.
FIG. 5 depicts an exemplary power switch circuit having a three-phase inverter bridge circuit, according to an embodiment.
FIG. 6 depicts an exemplary waveform diagram of a pulse-width modulation (PWM) drive sequence of the three-phase inventor bridge circuit of FIG. 5 within a full 360-degree conduction cycle.
FIG. 7 depicts an exemplary waveform diagram of a pulse-width modulation (PWM) drive sequence within a full 360-degree conduction cycle with synchronous rectification, according to an embodiment.
FIG. 8 depicts a partial zoomed-in view of the drive signals on the UH, VL, and WL power switches during motor commutation from sector 1 to sector 2, according to an embodiment.
FIGs. 9A, 9B and 9C depict circuit diagrams the current paths through the inverter circuit (i.e., power switch circuit 222) at three reference times, according to an embodiment.
FIGs. 10A and 10B depict circuit diagrams showing the current paths through the inverter circuit immediately before and after the commutation between two sectors and during a PWM off-cycle of the high-side switch, according to an embodiment.
FIG. 11 depicts an exemplary voltage and current waveform diagram showing a bus current waveform and a bus voltage waveform resulting from the negative current conditions during motor commutation, according to an embodiment.
FIG. 12 depicts an exemplary waveform diagram of a drive sequence of the inventor circuit, where a conduction band of each low-side switch that is actively driven during a previous sector is extended into a present sector for the duration of a current dissipation period, according to a first embodiment.
FIG. 13 depicts a circuit diagram corresponding to the drive sequence of the first embodiment, according to an embodiment.
FIG. 14 depicts an exemplary voltage and current waveform diagram resulting from the drive sequence of the first embodiment, according to an embodiment.
FIG. 15 depicts an exemplary waveform diagram of a drive sequence of the inventor circuit, where a commutation of the next sector is delayed for the duration of the current dissipation period, and a switching pattern is introduced during the current dissipation period to provide a current dissipation path for the phase currents of the previous sector, according to a second embodiment.
FIG. 16 depicts a circuit diagram corresponding to the drive sequence of the second embodiment, according to an embodiment.
FIG. 17 depicts an exemplary voltage and current waveform diagram resulting from the drive sequence of the second embodiment, according to an embodiment.
FIG. 18 depicts an exemplary waveform diagram of a drive sequence of the inventor circuit, where an ON-cycle of a PWM drive of each active high-side switch is maintained during the current dissipation period immediately after the motor commutation between the two consecutive sectors, according to a third embodiment.
FIG. 19 depicts a circuit diagram corresponding to the drive sequence of the third embodiment, according to an embodiment.
FIG. 20 depicts an exemplary voltage and current waveform diagram resulting from the drive sequence of the third embodiment, according to an embodiment.

Corresponding reference numerals indicate corresponding parts throughout the several views of the drawings.

### DESCRIPTION

Example embodiments will now be described more fully with reference to the accompanying drawings.

The following description illustrates the claimed invention by way of example and not by way of limitation. The description clearly enables one skilled in the art to make and use the disclosure, describes several embodiments, adaptations, variations, alternatives, and uses of the disclosure, including what is presently believed to be the best mode of carrying out the claimed invention. Additionally, it is to be understood that the disclosure is not limited in its application to the details of construction and the arrangements of components set forth in the following description or illustrated in the drawings. The disclosure is capable of other embodiments and of being practiced or being carried out in various ways. Also, it is to be understood that the phraseology and terminology used herein is for the purpose of description and should not be regarded as limiting.

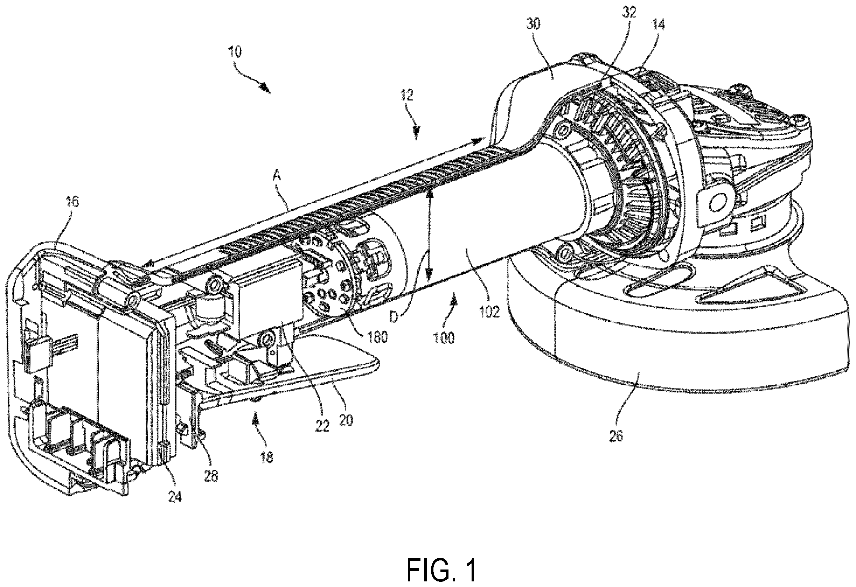

FIG. 1 depicts a perspective view of a power tool 10 including an elongate housing 12 that houses a brushless direct-current (BLDC) motor 100, a gear case 14 mounted forward of the housing 12, and a battery receptacle 16 formed at the foot of the housing 12 opposite the gear case 14. In this view, the housing 12 is made of a pair of clamshells, one of which is removed to expose the BLDC motor 100 and associated components disposed within the housing 12, according to an embodiment.

In an embodiment, battery receptacle 16 is configured to receive a removable and rechargeable power tool battery pack therein. The battery pack, not shown in this figure, may be, for example a lithium-ion battery pack having a nominal voltage of 18V.

In an embodiment, power tool 10 further includes a trigger assembly 18 mounted on the housing 12 and includes a paddle switch 20 engageable by a user and a switch assembly 22 disposed within the housing 12. In an embodiment, switch assembly 22 may include a mechanical contact switch, a logic switch, or a combination thereof, arranged to activate or deactivate supply of power from the battery pack.

In addition, in an embodiment, power tool 10 includes a control module 24, which in this example is disposed near the battery receptacle 16. In an embodiment, control module 24 includes a programmable controller, such as a microcontroller device, not shown in this figure, mounted on a printed circuit board. The controller includes code that controls supply of electric power to the motor according to various criteria, such as load, speed, and power requirements. In an embodiment, control module 24 may further include a series of power switches, also not shown, configured as a three-phase inverter circuit, controlled by the controller for driving the motor 100. Details of the controller and power switcher are beyond the scope of this disclosure. Reference is made, by way of example, to US Patent No. 10,680,494; US Patent No. 10,615,733; and US Patent No. 10,693,344, all of which are incorporated herein by reference in their entireties, as various examples of motor control and drive configurations.

In an embodiment, the power tool 10 is an angle grinder by way of example, though it is noted that the principles described herein may be utilized in various other power tools such as a cutout tool, a polisher, a wrench, a drill, an impact driver, a hammer drill, a circular saw, a reciprocating saw, a band saw, a nailer, etc.

In an embodiment, the gear case 14 receives a motor shaft that is rotatable with the motor 100 and includes a series of gears and supports an output spindle driven In an embodiment, the output spindle may be oriented perpendicularly to the motor shaft. In an embodiment, the gear case 14 may additionally include a spindle lock engageable by a user to prevent rotation of the output spindle while the user is mounting a grinding or cutting wheel onto the output spindle. In an embodiment, the gear case 14 may also include a retention flange configured to apply a biasing force to the grinding or cutting wheel for increased security, as described in US Patent Application No. 17/412,448 filed on August 26, 2021, which is incorporated herein by reference in its entirety. In an embodiment a guard 26 may be mounted on a collar portion of the gear case 14 around the grinding or cutting accessory.

In an embodiment, the power tool 10 is designed as a body-grip power tool with the housing 12 being sized to fit into a hand grip of a user with relative ease even in the area around the motor 100. As such, in an embodiment, the housing 12 has a maximum diameter D of approximately 35 to 45 mm, preferably approximately 37 to 43 mm, more preferably at most 40 mm, around most of the length of the motor 100. In an embodiment, this maximum diameter D extends along length A of the housing 12, beginning proximate the battery receptacle 16 and a pivoting connection point 28 of a distal end of the paddle switch 20, to a frontal end 30 of the housing 12 formed around a fan baffle 32 radially containing a motor fan (not shown) and a front end of the motor 100. In an embodiment, the front end of the housing 12 includes a larger diameter than the remainder the housing 12 by a factor of approximately 1.7 to 2. It is noted, however, that in some applications, the rear of the gear case 14, and thus the front end of the housing 12, include a diameter that is approximately equal to or up to 20% greater than the diameter of the remainder of the housing 12. In an embodiment, the housing 12 includes a maximum diameter D along at least 80% of the entire length of the motor 100, preferably along at least 85% of the entire length of the motor 100.

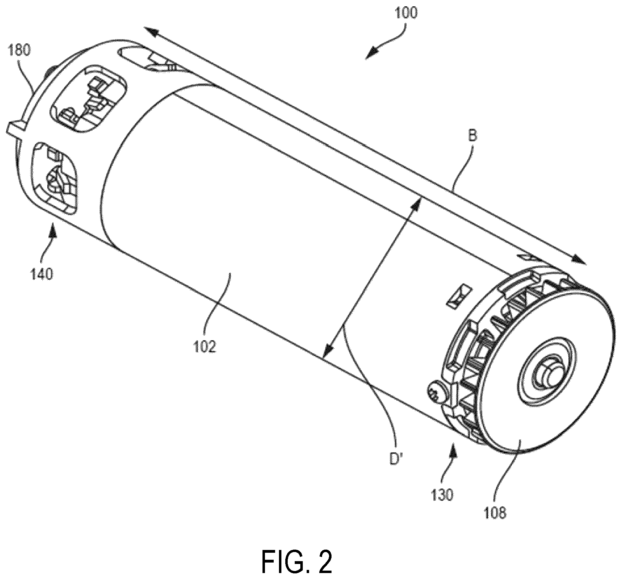

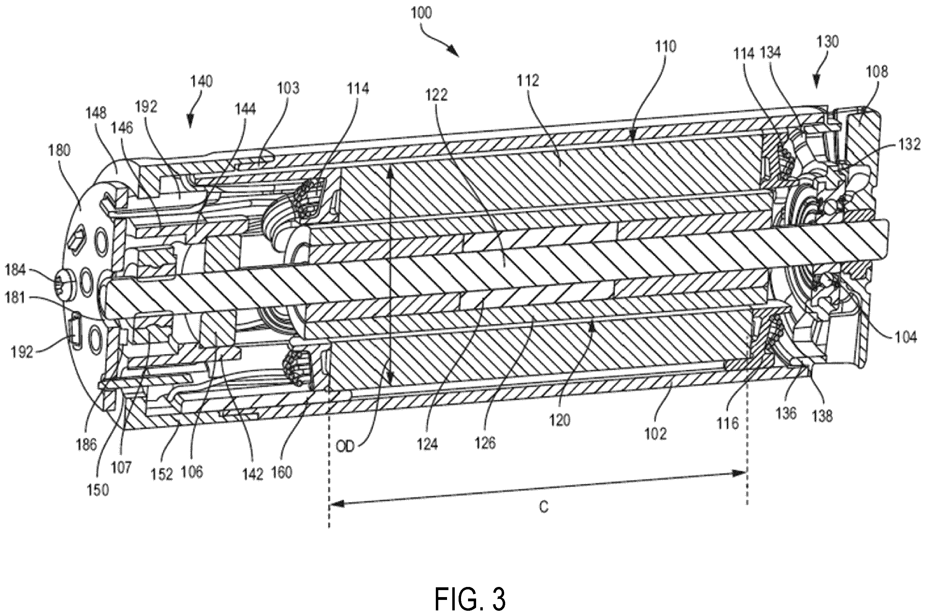

FIG. 2 depicts a perspective view of the brushless DC (BLDC) motor 100, according to an embodiment. FIG. 3 depicts a cross-sectional view of the motor 100, according to an embodiment.

In an embodiment, the motor 100 includes a motor housing (or motor can) 102 having a substantially cylindrical body and two open ends that supports the components of the motor 100 described below. In an embodiment, the motor can 102 may be made of steel or other metal to provide a reliable mounting structure for the motor components. The motor 100 further includes a stator assembly 110 and a rotor assembly 120 mounted on a rotor shaft 122.

In an embodiment, stator assembly 110 is securely received within the inner diameter of the motor can 102 and includes a stator core 112, which may be formed of a series of laminated steel members, and a series of stator windings 114 supported by the stator core 112. In an embodiment, the rotor assembly 120 includes one or more rotor core segments 124 mounted on the rotor shaft 122 in series, each rotor core segment 124 supporting a series of permanent magnets or a permanent magnet ring 126 mounted on its outer surface. In an embodiment, the rotor assembly 120 is disposed within the stator assembly 110. As stator windings 114 are energized in a controlled sequence, the magnetic interaction between the stator windings 114 and the permanent magnets 126 causes the rotation of the rotor assembly 120 relative to the stator assembly 110. For details on constructional and operational principles of the stator and the rotor, reference is made to US Patent No. 10,923,989, and US Patent Publication No. 2021/0194320, both of which are incorporated herein by reference in their entireties.

In an embodiment, stator assembly 110 further includes a front end-insulator 116 mounted on an axial end of the stator core 112 to insulate the stator windings 114 from the stator core 112. Specifically, front end-insulator 116 includes a series of teeth corresponding to the teeth of the stator core 112, and the stator windings 114 are wound around the teeth of the front end-insulator 116 to avoid direct contact with the metal part of the stator core 112. Reference is made to US Patent No. 10,328,566, as an example of a stator end-insulator construction.

In addition, stator assembly 110 further includes a rear end-insulator 160, herein referred to as a routing insulator. Routing insulator 160 is mounted on the other axial end of the stator core 112 opposite the front end-insulator 116, and similarly acts to insulate the stator windings 114 from the stator core 112. However, routing insulator 160 has a greater axial length than the front end-insulator 116, and it includes features for routing the magnet wire between stator windings 114 and supporting additional components associated with the stator windings 114, as will be described later in detail. In an embodiment, routing insulator 160 extends beyond the rear axial end of the motor can 102.

In an embodiment, motor 100 additionally includes a front bearing support structure (also referred to as front bearing bridge 130), and a rear bearing support structure (also referred to as rear bearing bridge) 140, mounted on the two axial ends of the motor can 102 adjacent two ends of the stator assembly 110. These features will be described below in detail.

In an embodiment, the motor 100 has an overall total length B, as defined from a front end of the front bearing bridge 130 to a rear end of the rear bearing bridge 140, of approximately 100mm to 130 mm, preferably approximately 110 mm to 120 mm. In an embodiment, the stator assembly 110 has length C, as defined by the length of the stator core 112, of approximately 45 mm to 75 mm, preferably approximately 55 mm to 65 mm, and more preferably no greater than 60 mm. As such, the difference between the overall total length B of the motor and the length C of the stator assembly 110 is approximately 45 mm to 65 mm, preferably approximately 50 mm to 60 mm. In an embodiment, length B is greater than length C by approximately 52% to 63%.

In an embodiment, the motor 100 also has a diameter D', as defined by the outer diameter of the motor can 102, of approximately 31 mm to 36 mm, preferably approximately 33 mm to 35 mm, preferably no more than 34 mm. The stator assembly 110 further includes an outer diameter OD, as defined by the outer diameter of the stator core 112, of approximately 27 mm to 34 mm, preferably approximately 28 mm to 33 mm, preferably approximately 29 mm to 32 mm. These dimensions allow for the motor 100 to fit into the small girth of the housing 12 of the power tool 10 while producing enough power for grinding or cutting applications. In an embodiment, the motor 100 is configured to produce maximum long duration power output of at least approximately 450 watts.

In an embodiment, the length B of the motor 100 is at least approximately 50%, more preferably 55%, and even more preferably 60%, of the overall length of the tool housing 12 including frontal end 30 and the battery receptacle 16.

In an embodiment, stator assembly 110 may include a segmented design, where a series of (for example, six) discrete core segments are separately wound and then joined together to form the stator core 112. This configuration is particularly suitable for a small-diameter stator assembly 110, where each segment may be wound to the desired number of turns prior to forming the stator core 112. This configuration, however, has drawbacks associated with cost of manufacturing, reliability, noise and vibration, and cogging torque.

Alternatively, and preferably, stator core 112 is formed with a non-segmented annular body and a series of inwardly-projecting teeth on which the stator windings 114 are wound. Stator core 112 may be a solid-core unit made as a single piece. Alternatively, stator core 112 may be made of laminated steel sheets placed together and interlocked to form a uniform body.

A challenge associated with a non-segmented stator core having a small diameter of, e.g., 36 mm or less is the winding process of the stator windings 114, particularly if a high slot fill is needed to produce a high level of power density. The winding process may be particularly challenging where the length of the stator is large to compensate for the smaller diameter.

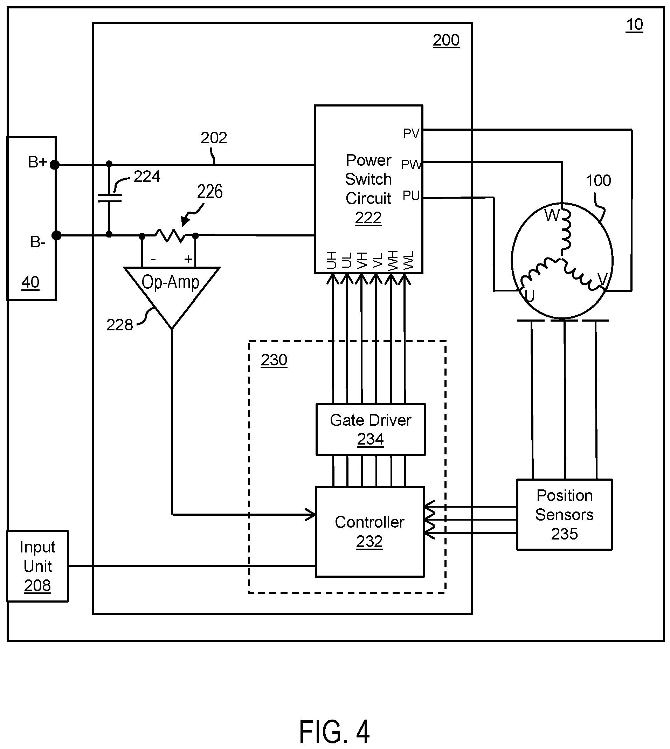

FIG. 4 depicts an exemplary block circuit diagram of the power tool 10 components, including the motor control and power module 200 disposed between battery receptacle 40 and motor 100, according to an embodiment.

In an embodiment, motor control and power module 200 includes a power switch circuit 222 and a control unit 230.

In an embodiment, power switch circuit 222 that receives electric power on a DC bus line 202 from the B+/B- terminals of the battery receptacle 40 and supplies power to the motor windings to drive the motor 100. In an embodiment, power switch circuit 222 may be a three-phase bridge driver circuit including six controllable semiconductor power switches, e.g. Field Effect Transistors (FETs), Insulated-Gate Metal Transistors (IGBTs), etc. In an embodiment, a bus capacitor 224 may be disposed across the DC bus line 202 to absorb residual voltage irregularities. Further, in an embodiment, a shunt resistor 226 may be disposed on the DC bus line 202, on either the B+ or B- (or Ground) node of the DC bus line 202. An operational amplifier 228 is further coupled across the shunt resistor 226. The current through the shunt resistor 226 creates a voltage across the shunt resistor 226 proportional to the current, which is amplified by the operational amplifier 228.

In an embodiment, FETs may be more suitable for relatively lower power / lower voltage power tool applications (e.g., power tools having operating voltages of approximately 10 to 80 V), and IGBTs may be more suitable for relatively higher voltage / higher voltage power tool applications (e.g., power tools having operating voltages of approximately 100 - 240 V).

In an embodiment, control unit 230 may include a controller 232 and a gate driver 234. In an embodiment, controller 232 is a programmable device (e.g., a microcontroller, micro-processor, etc.) arranged to control a switching operation of the power devices in power switching circuit 222. In an embodiment, controller 232 handles all aspect of motor control, including, but not limited to, motor drive and commutation control (including controlling the switching operation of the power switching circuit 222 to control motor speed, forward/reverse drive, phase current limit, start-up control, electronic braking, etc.), motor stall detection (e.g., when motor suddenly decelerates or motor current rapidly rises), motor over-voltage detection and shutdown control, motor or module over-temperature detection and shutdown control, electronic clutching, and other control operations related to the motor.

In an embodiment, controller 232 receives rotor rotational position signals from a set of position sensors 235 provided in close proximity to the motor 100 rotor. In an embodiment, position sensors 235 may be Hall sensors. It is noted, however, that other types of positional sensors may be alternatively utilized. It is also be noted that controller 232 may be configured to calculate or detect rotational positional information relating to the motor 100 rotor without any positional sensors (in what is known in the art as sensorless brushless motor control).

In an embodiment, controller 232 may also receive an ON/OFF signal from an input unit 208. Input unit 208 may correspond to the switch assembly 22 of FIG 1 and may be coupled to the trigger switch 34 and provides the ON/OFF signal according to the state of the trigger assembly 18. In a power tool configured to vary the rotational speed of the motor based on the travel distance of the trigger assembly 18, the input unit 208 may provide a variable-speed signal to the controller 232. Based on the rotor rotational position signals from the position sensors 238 and the ON/OFF and/or variable-speed signal from the input unit 208, controller 232 outputs drive signals UH, VH, WH, UL, VL, and WL through the gate driver 234. Gate driver 234 is provided to output the voltage level needed to drive the gates of the semiconductor switches within the power switch circuit 222 in order to control a PWM switching operation of the power switch circuit 222.

In an embodiment, a power supply regulator (not shown) may be provide including one or more voltage regulators to step down the power supply to a voltage level compatible for operating the controller 232 and/or the gate driver 234. In an embodiment, power supply regulator may include a buck converter and/or a linear regulator to reduce the power voltage from the battery pack (not shown) down to, for example, 15V for powering the gate driver 234, and down to, for example, 3.3V for powering the controller 232.

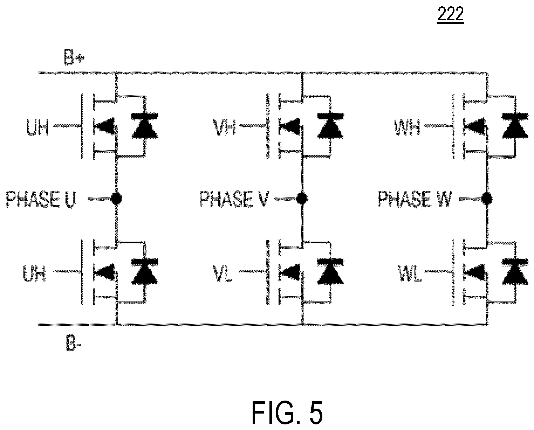

FIG. 5 depicts an exemplary power switch circuit 222 having a three-phase inverter bridge circuit, according to an embodiment. As shown herein, the three-phase inverter bridge circuit includes three high-side switches and three low-side switches. The gates of the high-side switches driven via drive signals UH, VH, and WH, and the gates of the low-side switches are driven via drive signals UL, VL, and WL. In an embodiment, the drains of the high-side switches are coupled to the sources of the low-side switches to output power signals PU, PV, and PW for driving the BLDC motor 100. Further, the sources of the high-side switches are coupled to the B+ node and the drains of the low-side switches are coupled to the B- node. By driving the gates of the switches, the motor controller 232 controls the phase of the motor being energized, and the amount of electric power being delivered. In an embodiment, a flyback diode is coupled across each of the power switches to allow passage of current from the source to the drain of the switch if the switch is off.

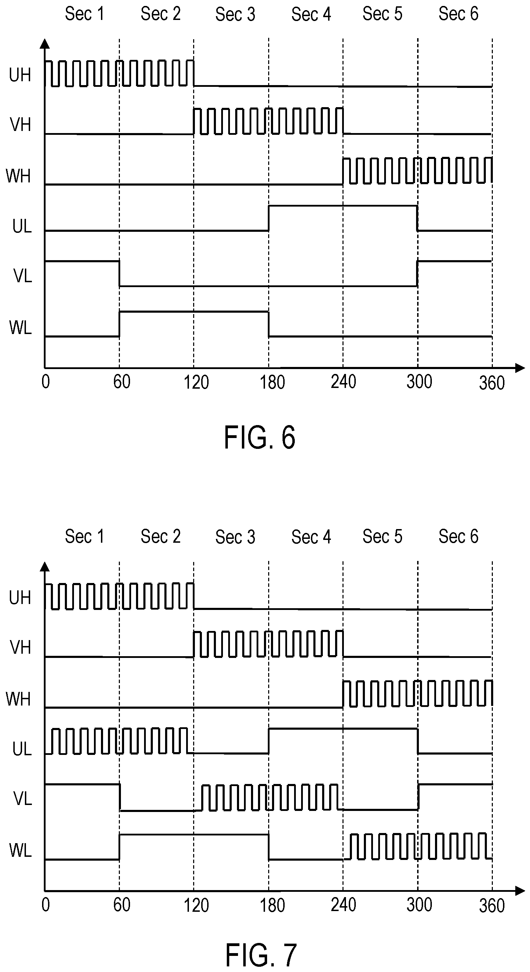

FIG. 6 depicts an exemplary waveform diagram of a pulse-width modulation (PWM) drive sequence of the three-phase inventor bridge circuit of FIG. 5 within a full 360-degree conduction cycle, according to an embodiment. As shown in this figure, within a full 360° cycle, each of the drive signals associated with the high-side and low-side power switches is activated during a 120° conduction band ("CB"). In this manner, each associated phase of the BLDC motor is energized within a 120° CB by a pulse-width modulated voltage waveform that is controlled by the control unit 230 as a function of the desired motor rotational speed. For each phase, the high-side switch is pulse-width modulated by the control unit 230 within a 120° CB. During the CB of the high-side switch, the corresponding low-side switch is kept low, but one of the other low-side switches is driven via a pulse-width modulated signal to provide a current path between the power supply and the motor windings. For example, during the activation of the UH switch in sectors 1 and 2, the VL switch is activated during sector 1, and the WL switch is activated during sector 2. The motor controller 232 controls the amount of voltage provided to the motor, and thus the speed of the motor, via PWM control of the high-side switches.

FIG. 7 depicts an exemplary waveform diagram of a pulse-width modulation (PWM) drive sequence within a full 360-degree conduction cycle with synchronous rectification, according to an embodiment. With synchronous rectification, for each active high-side switch, the corresponding low-side switch is driven via a PWM signal that is complimentary to the high-side PWM signal. Specifically, during the on-cycles of the PWM drive of the active high-side power switch, the corresponding low-side power switch is off, and during the off-cycles of the PWM drive of the active high-side power switches, the active low-side switch is on. For example, when the UH switch is driven during sectors 1 and 2, the UL switch is driven via a complementary PWM signal within the same two sectors, while the VL switch is activated during sector 1 and the WL switch is activated during sector 2. In an embodiment, small delay periods (i.e., dead time) may be inserted between the on-cycles of the high-side and low-side power switches in each PWM cycle to prevent destructive cross-conduction currents.

It has been observed that during the motor commutation from one sector to the next, in some conditions, a current path from the phase current of the previous sector may be temporarily established through the bus line 202 in a direction opposite the battery current. This condition may occur, for example, when commutating from two sectors of the same high-side phase (e.g., sector 1 to sector 2), where the phase currents in the motor windings builds up prior to the commutation (e.g., U-V phase of the motor), and after the commutation, the same phase current flow through the high-side flywheel diode back to the bus line in a direction opposite the flow of current from the battery pack. This negative current causes a rapid rise in the DC bus voltage and/or DC bus current, that may cause damage to the power switch and/or flywheel diode components.

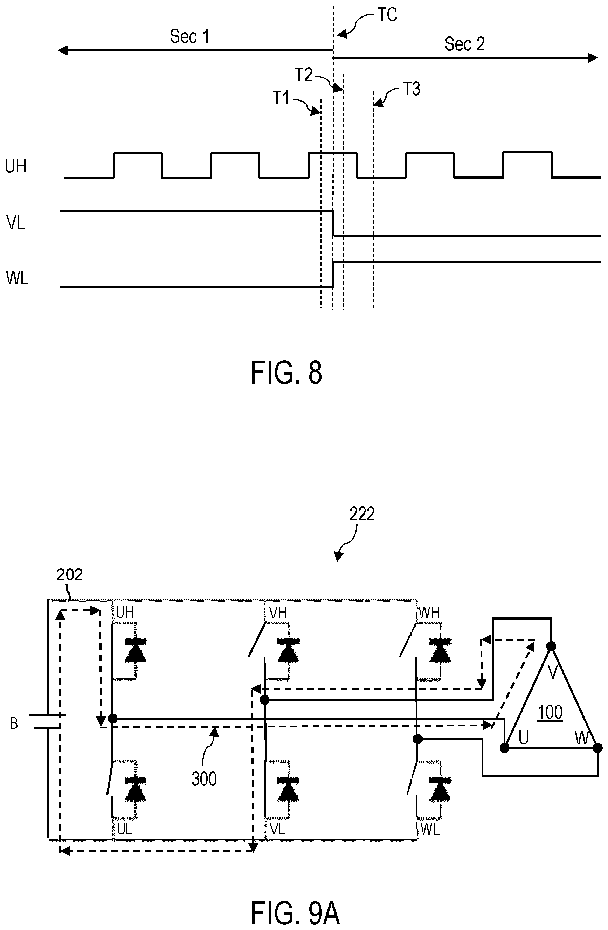

FIG. 8 depicts a partial zoomed-in view of the drive signals on the UH, VL, and WL power switches during motor commutation from sector 1 to sector 2, according to an embodiment. Here, reference time TC designates the commutation from sector 1 to sector 2, reference time T1 designates a time sample prior to the commutation while the high side switch UH is in a PWM on-cycle, reference time T2 designates a time sample immediately after the commutation while the high side switch UH is in a PWM on-cycle, and reference time T3 designates a time sample after T2 and after the high side switch UH has switched to a PWM off-cycle.

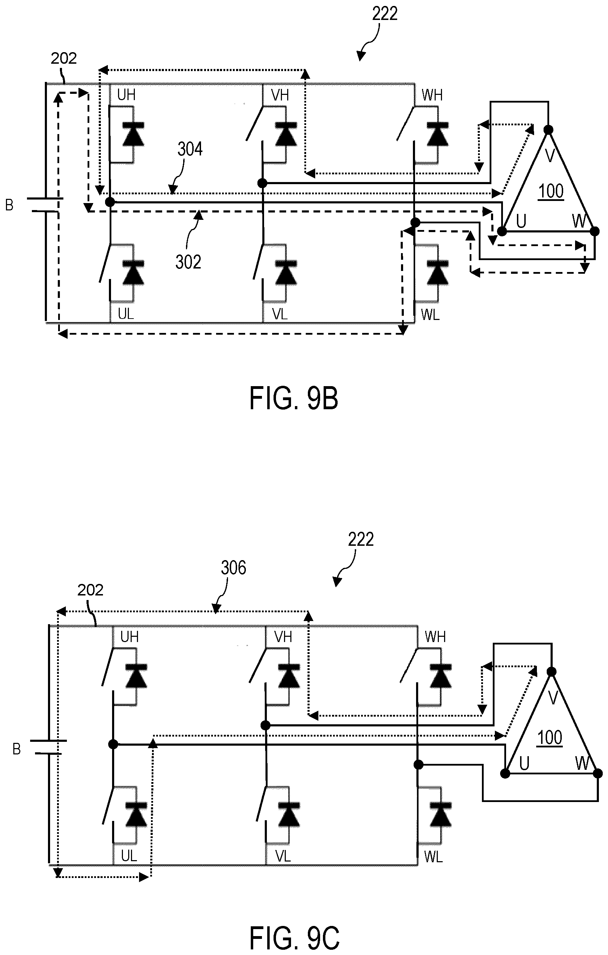

FIGs. 9A, 9B and 9C depict circuit diagrams the current paths through the inverter circuit (i.e., power switch circuit 222) at reference times T1, T2 and T3 of FIG. 8, according to an embodiment.

In an embodiment, as shown in FIG. 9A, at reference time T1 prior to motor commutation, a current path 300 is developed from the battery pack B, into the bus line 202, the UH switch, the U-V phase of the motor 100, and the VL power switch, back to the bus line 202 and the battery pack B.

In an embodiment, as shown in FIG. 9B, at reference time T2 immediately after motor commutation, a current path 302 is developed from the battery pack B, into the bus line 202, the UH switch, the U-W phase of the motor 100, and the WL power switch, back to the bus line 202 and the battery pack B. In the meantime, the phase current that had previously developed through the U-V phase of the motor 100 in the previous sector dissipates via a current path 304 that recirculates through the flywheel diode of the VH power switch and the UH power switch into the U-V phase of the motor 100. In an embodiment, this phase current rapidly dissipates through the recirculation current path 304 during the PWM on-cycle of the UH power switch.

In an embodiment, as shown in FIG. 9C, at reference time T3 after the high side switch UH has switched to a PWM off-cycle, there is no current path from the battery pack B. In some circumstances, however, when there is residual phase current in the U-V phase that does not fully dissipate during the PWM on-cycle of the UH power switch, the residual phase current is unable to recirculate back into the U-V phase of the motor. This is because all the high-side power switches are off. Accordingly, a native current path 306 developed in a direction opposite the battery pack B current. This negative current can often lead to high voltage levels on the bus line 202, which may cause catastrophic damage to the power switches.

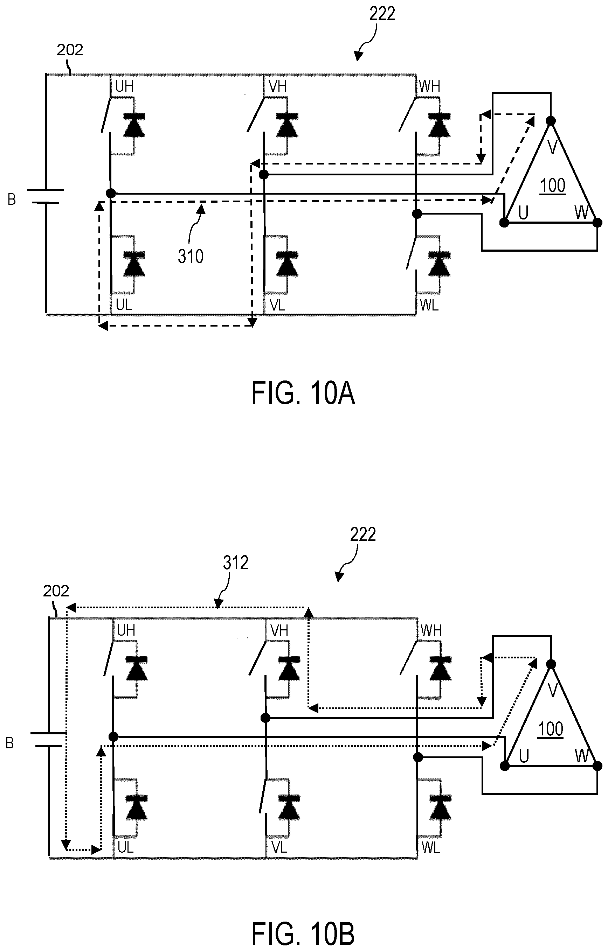

Another example where negative currents can develop through the bus line 202 is if the commutation from one sector to the next occurs during a PWM off-cycle of the high-side switch. In an example, the commutation from sector 1 to sector 2 occurs during the PWM off-cycle of the high-side power switch UH, as described here with reference to FIG. 10A and 10B.

FIGs. 10A and 10B depict circuit diagrams showing the current paths through the inverter circuit immediately before and after the commutation from sector 1 to sector 2 and during a PWM off-cycle of the high-side switch, according to an embodiment.

In an embodiment, as shown in FIG. 10A, prior to motor commutation, there is no current path from the battery pack B, since all the high-side switch are off. However, the phase current developed through the U-V phase of the motor 100 recirculates via a current path 310 through the low-side VL power switch, and through the flywheel diode of the low-side UL switch, into the U-V phase of the motor 100. In an embodiment, where synchronous rectification is implemented, the UL power switch is on during the off-cycle of the UH power switch, so the current path 310 may pass through the UL power switch.

In an embodiment, as shown in FIG. 10B, immediately after motor commutation and while the high-side power switch UH is still in its PWM off-cycle, the current path though low-side power switch VL is cut off, so the U-V phase current is unable to recirculate back into the motor. Accordingly, a negative current path 312 is developed through the VH flywheel diode and the UL flywheel diode (or the UL switch if synchronous rectification is implemented) in a direction opposite the battery pack B current. This negative current can often lead to high voltage levels on the bus line 202, which may cause catastrophic damage to the power switches.

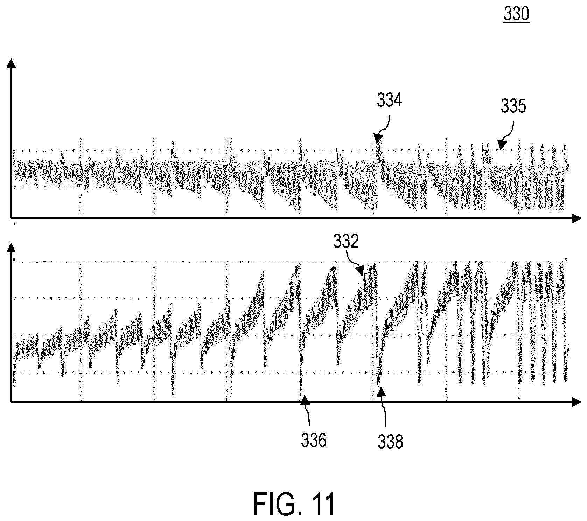

FIG. 11 depicts an exemplary voltage and current waveform diagram 330 showing a bus current waveform 332 and a bus voltage waveform 334 resulting from the negative current conditions during motor commutation as described above, according to an embodiment. In this example, a cycle-by-cycle current limit (i.e., a current clip threshold) of 300A is applied to the bus current waveform 332 to ensure that an instantaneous measure of the peak bus current does not exceed 300A. A detailed description of cycle-by-cycle current limit may be found in US Patent No. 9,762,153 filed May 18, 2015, which is incorporated herein by reference in its entirety. The negative currents developed through the bus line can be shown in the sharp current drops in the bus current waveform 332 during motor commutations. For example, current drop 336 occurs during the (UH, VL) to (UH, WL) commutation, and current drop 338 occurs during the (VH, WL) to (VH, UL) commutation. These current drops cause an increase on the bus voltage. In an embodiment, where the battery pack has a rated maximum voltage of approximately 20V, the peak voltage on the bus voltage waveform 334 can reach a peak voltage 335 of over 31 V at high current conditions of up to 300A. This voltage level may exceed the voltage ratings of many of the power switch components and/or other circuit components.

Described below in detail are exemplary embodiments of commutation schemes that inhibit circulation of negative currents into the bus line after motor commutation and accordingly prevent high bus voltage conditions that may lead to catastrophic component failure. In an embodiment, according to various embodiments, within each phase of the motor where one of the plurality of high-side power switches is driven by a pulse-width modulation (PWM) control signal and includes a first sector and a second sector, a current path is provided for dissipation of the motor current associated with the first sector for a current dissipation period that starts immediately after commutation to the second sector to avoid negative flow of motor current into the bus line. Briefly, according to various embodiments, the conduction band of a low-side switch that is actively driven during a previous sector is extended into the present sector for the duration of the current dissipation period immediately after motor commutation. Alternatively, and/or additionally, according to various embodiments, the commutation of the next phase may be delayed by the current dissipation period and an intermediary current clip may be implemented in the active high-side power switch and the corresponding low-side power switch before the commutation of the next phase. Alternatively, and/or additionally, according to various embodiments, an on-cycle of the active high-side power switch may be extended by the current dissipation period immediately after motor commutation. All these embodiments create a current path for circulation of phase current through the inverter circuit and the motor, thus preventing negative flow of phase current into the bus line.

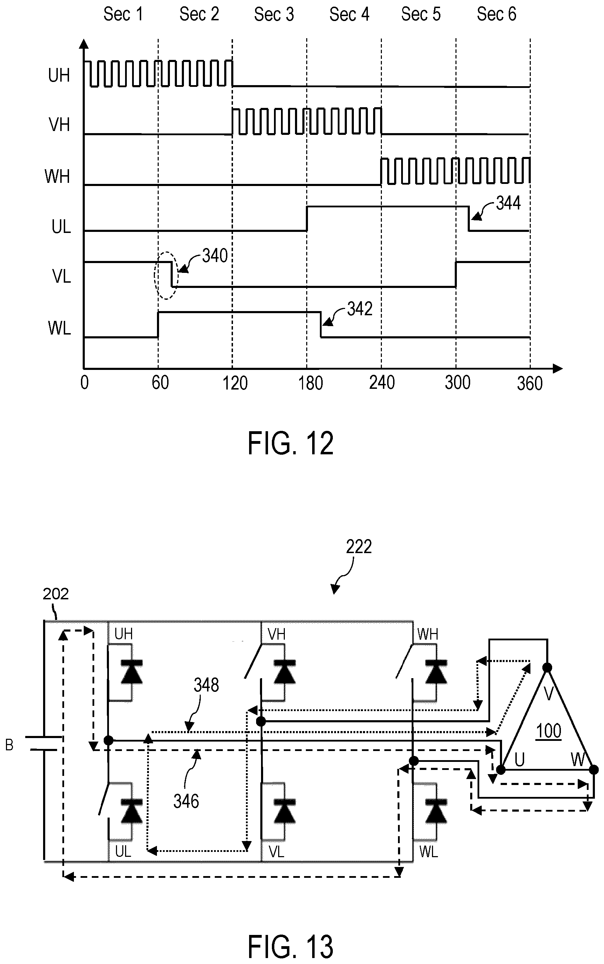

FIG. 12 depicts an exemplary waveform diagram of a drive sequence of the inventor circuit within a full 360-degree conduction cycle, where a conduction band of each low-side switch that is actively driven during a previous sector is extended into a present sector for the duration of an extension period (i.e., the current dissipation period), according to a first embodiment of the invention. In an embodiment, during the commutation from sector 1 to sector 2, the conduction band (i.e., conduction angle) of the low-side VL power switch that is active during sector 1 is extended into sector 2 by an extension period 340 after the low-side WL power switch is activated. Similarly, during the commutation from sector 3 to sector 4, the conduction band (i.e., conduction angle) of the low-side WL power switch that is active during sector 3 is extended into sector 4 by extension period 342 after the low-side UL power switch is activated. Also, during the commutation from sector 5 to sector 6, the conduction band (i.e., conduction angle) of the low-side UL power switch that is active during sector 5 is extended into sector 6 by extension period 344 after the low-side VL power switch is activated.

In an embodiment, extension periods 340, 324 and 344 (i.e., the current dissipation periods) may be preset durations of time (e.g., 50 µs to 250 µs), preset number of PWM cycles (e.g., 2 to 5 PWM cycles), or a predetermined angle (e.g., 5 degrees to 20 degrees). Alternatively, extension periods 340, 324 and 344 may be dynamically set as a function of the bus current so that the greater the detected current on the bus line, the greater the extension periods.

As shown below, the activation of the low-side power switches VL, WL and UL during extension periods 340, 324 and 344 gives the phase current of the motor sufficient time to dissipate through the motor.

FIG. 13 depicts a circuit diagram corresponding to the drive sequence of FIG. 12 showing the current paths through the inverter circuit immediately after the commutation from sector 1 to sector 2, according to an embodiment. In an embodiment, immediately after motor commutation from sector 1 to sector 2, the current generated by the battery pack B passes via a current path 346 through the UH power switch into the U-W phase of the motor 100, and through the WL power switch back to the bus line 202. In the meantime, the phase current that had previously developed through the U-V phase of the motor 100 in the previous sector dissipates via a current path 348 that recirculates through the VL power switch and the flywheel diode of the UL power switch during the extension period 340. In an embodiment, the extension period 340 provides sufficient time for this phase current to dissipate through the recirculation current path 348, thus inhibiting circulation of negative currents into the bus line after motor commutation from sector 1 to sector 2, and accordingly preventing high bus voltage conditions that may lead to catastrophic component failure.

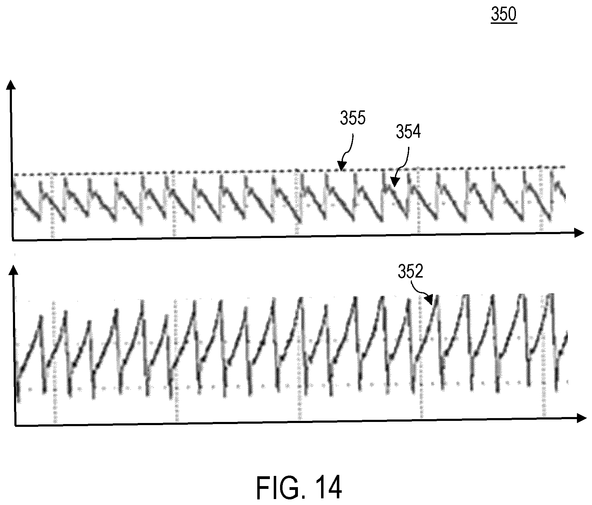

FIG. 14 depicts an exemplary voltage and current waveform diagram 350 showing a bus current waveform 352 and a bus voltage waveform 354 resulting from the drive sequence of the first embodiment, where the conduction band of each low-side switch that is actively driven during a previous sector is extended into a present sector by an extension period. As shown here, in comparison to FIG. 11, since the negative currents are not developed in the bus line after each motor commutation, the current drop levels immediately after motor commutations have been reduced. Accordingly, the peak voltage levels on the bus voltage waveform 354 are similarly reduced. In an embodiment, where the battery pack has a rated maximum voltage of approximately 20V, the peak voltage level 355 on the bus voltage waveform 354 is maintained below approximately 22 V at high current conditions of up to 300A. Accordingly, the drive sequence of the first embodiment prevents build-up of high voltage on the bus line that can damage the power switches or the associated components.

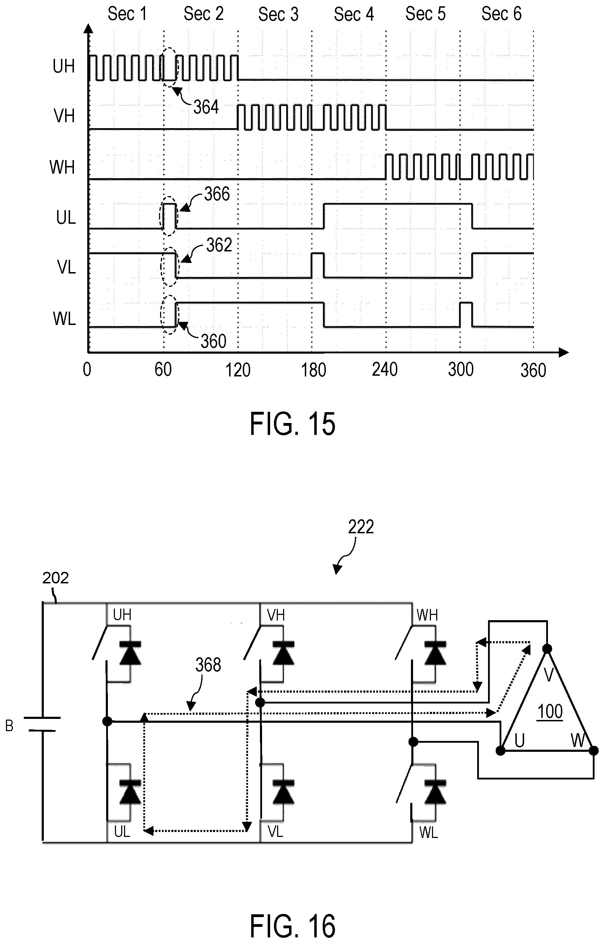

FIG. 15 depicts an exemplary waveform diagram of a drive sequence of the inventor circuit within a full 360-degree conduction cycle, where a commutation of the next sector is delayed for the duration of a delay period (i.e., the current dissipation period) and a switching pattern is introduced during the current dissipation period to provide a current dissipation path for the phase currents of the previous sector, according to a second embodiment of the invention. In an embodiment, at the conclusion of the commutation of sector 1, the commutation of the low-side WL power switch in sector 2 is delayed by a delay period 360 (i.e., the current dissipation period). During this delay period, the conduction band (i.e., conduction angle) of the low-side VL power switch that is active during sector 1 is extended by an extension period 362 that corresponds to the delay period 360. Furthermore, the PWM drive of the high-side UH power switch is deactivated for a corresponding delay period 364. This ensures that the flow of current from the battery pack B is suspended during this delay period 360. Meanwhile, in an embodiment, the low-side UL power switch is activated during an activation period 366 corresponding to the delay period 360. This switching pattern provides a current path for the U-V phase current of sector 1 to dissipate through the motor prior to the start of the commutation of the next sector. In an embodiment, a similar switching pattern is execution during the commutation from sector 3 to sector 4, and during the commutation from sector 5 to sector 6.

In an embodiment, the delay period 360, and the corresponding periods 362, 364 and 366, may be preset durations of time (e.g., 50 µs to 250 µs), preset number of PWM cycles (e.g., 2 to 5 PWM cycles), or a predetermined angle (e.g., 5 degrees to 20 degrees). Alternatively, these delay periods may be dynamically set as a function of the bus current so that the greater the detected current on the bus line, the greater the delay periods.

FIG. 16 depicts a circuit diagram corresponding to the drive sequence of FIG. 15 showing the current paths through the inverter circuit immediately after the conclusion of the commutation of sector 1, according to an embodiment. In an embodiment, immediately after motor commutation of sector 1, the phase current that had previously developed through the U-V phase of the motor 100 in sector 1 dissipates via a current path 368 that recirculates through the VL power switch and either the UL power switch (if the UL power switch is activated during the activation period 366) or the flywheel diode of the UL power switch (if the activation period 366 is optionally not present). In an embodiment, the delay period 360 provides sufficient time for this phase current to dissipate through the recirculation current path 368 prior to the start of motor commutation through the WL power switch, thus inhibiting circulation of negative currents into the bus line after motor commutation from sector 1 to sector 2, and accordingly preventing high bus voltage conditions that may lead to catastrophic component failure.

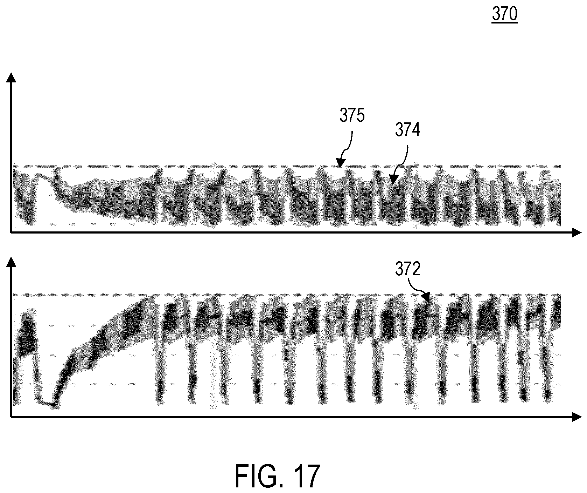

FIG. 17 depicts an exemplary voltage and current waveform diagram 370 showing a bus current waveform 322 and a bus voltage waveform 374 resulting from the drive sequence of the second embodiment, where a commutation of the next sector is delayed by the delay period and a switching pattern is introduced during the delay period to provide a current dissipation path for the phase currents of the previous sector. As shown here, in comparison to FIG. 11, since the negative currents are not developed in the bus line after each motor commutation, the current drop levels immediately after motor commutations have been reduced. Accordingly, the peak voltage levels on the bus voltage waveform 374 are similarly reduced. In an embodiment, where the battery pack has a rated maximum voltage of approximately 20V, the peak voltage level 375 on the bus voltage waveform 354 is maintained below approximately 25 V at high current conditions of up to 300A. Accordingly, the drive sequence of the second embodiment prevents build-up of high voltage on the bus line that can damage the power switches or the associated components.

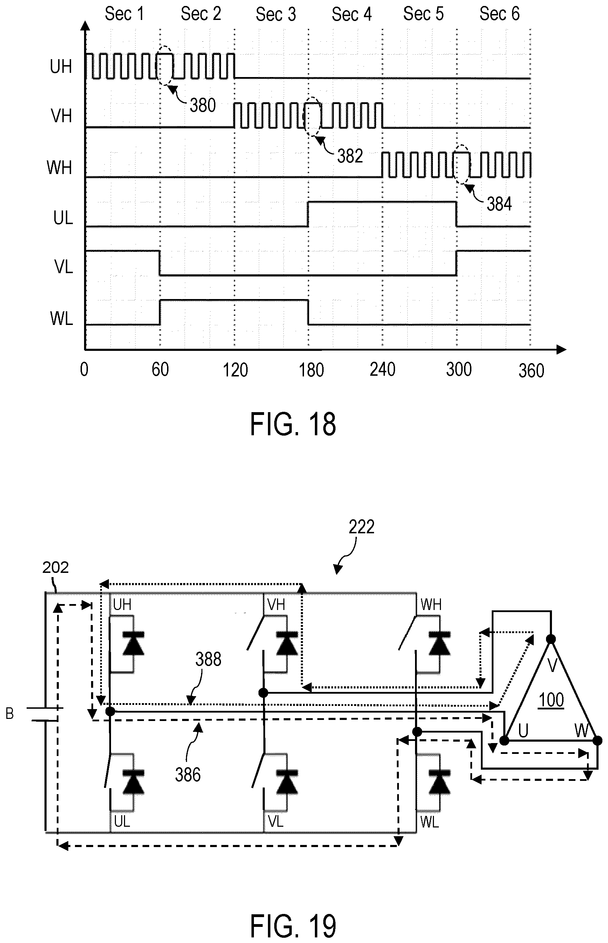

FIG. 18 depicts an exemplary waveform diagram of a drive sequence of the inventor circuit within a full 360-degree conduction cycle, where an on-cycle of a PWM drive of each active high-side switch (i.e., a high-side switch that is actively driven during two consecutive sectors) is maintained during for an active period (i.e., the current dissipation period) immediately after the motor commutation between the two consecutive sectors, according to a third embodiment of the invention. In other words, the PWM duty cycle of the active high-side switch is set to 100% for the duration of the active period immediately after the motor commutation. This ensures that the high-side switch does not include an off-cycle during the active period, so the phase current of the previous sector does not flow back in the bus line. In an embodiment, during the commutation from sector 1 to sector 2, the low-side VL power switch that is active during sector 1 is deactivated and the low-side WL power switch is activated, but the PWM drive of the high-side UH power switch is maintained at its on-cycle (i.e., 100% duty cycle) during an active period 380 immediately after the commutation. Similarly, during the commutation from sector 3 to sector 4, the PWM drive of the high-side VH power switch is maintained at its on-cycle (i.e., 100% duty cycle) during an active period 382 immediately after the commutation. Also, during the commutation from sector 5 to sector 6, the PWM drive of the high-side WH power switch is maintained at its on-cycle (i.e., 100% duty cycle) during an active period 384 immediately after the commutation.

In an embodiment, active periods 380, 382 and 384 (current dissipation periods) may be preset durations of time (e.g., 50 µs to 250 µs), preset number of PWM cycles (e.g., 2 to 5 PWM cycles), or a predetermined angle (e.g., 5 degrees to 20 degrees). Alternatively, active periods 380, 382 and 384 may be dynamically set as a function of the bus current so that the greater the detected current on the bus line, the greater the active periods.

FIG. 19 depicts a circuit diagram corresponding to the drive sequence of FIG. 18 showing the current paths through the inverter circuit immediately after the commutation from sector 1 to sector 2, according to an embodiment. In an embodiment, immediately after motor commutation from sector 1 to sector 2, the current generated by the battery pack B passes via a current path 386 through the UH power switch into the U-W phase of the motor 100, and through the WL power switch back to the bus line 202. In the meantime, the phase current that had previously developed through the U-V phase of the motor 100 in the previous sector dissipates via a current path 388 that recirculates through the flywheel diode of the high-side VH power switch and the high-side UH power switch during the active period 380. In an embodiment, the active period 380 provides sufficient time for this phase current to dissipate through the recirculation current path 388, thus inhibiting circulation of negative currents into the bus line after motor commutation from sector 1 to sector 2, and accordingly preventing high bus voltage conditions that may lead to catastrophic component failure.

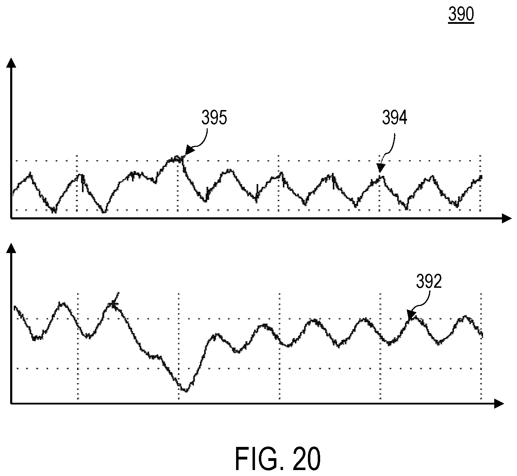

FIG. 20 depicts an exemplary voltage and current waveform diagram 390 showing a bus current waveform 392 and a bus voltage waveform 394 resulting from the drive sequence of the third embodiment, where the active high-side power switch is maintained at 100% duty cycle during the active period immediately after a motor commutation. As shown here, since the negative currents are not developed in the bus line after each motor commutation, the current drop levels immediately after motor commutations have been reduced. Accordingly, the peak voltage levels on the bus voltage waveform 354 are similarly reduced. In an embodiment, where the battery pack has a rated maximum voltage of approximately 20V, the peak voltage level 395 on the bus voltage waveform 354 is maintained below approximately 24 V at high current conditions of up to 300A. Accordingly, the drive sequence of the third embodiment prevents build-up of high voltage on the bus line that can damage the power switches or the associated components.

It should be noted that the three embodiments described above are provided to illustrate examples of this disclosure and should not be seen as limiting features of the invention. In particular, the three embodiments described above are merely examples of commutation scheme where, within at least one phase of the motor that includes a first sector and a second sector, a current path is provided for dissipation of the motor current associated with the first sector immediately after commutation to the second sector. The dissipation current path may be provided through the low-side power switches while the high-side power switch associated with that phase continues to drive the motor via current from the battery pack, an example of which is described in the first embodiment. Alternatively, the dissipation current path may be provided through the low-side power switches while the high-side power switch associated with that phase is temporarily deactivated to discontinue the motor drive, an example of which is described in the second embodiment. In yet another embodiment, the dissipation current path may be provided through the high-side power switches by temporarily setting the PWM duty cycle of the high-side power switch associated with that phase to 100%, an example of which is described in the third embodiment.

In an embodiment, the duration of the current dissipation period each in of the above-described embodiments, (i.e., extension periods of the first embodiment, the delay periods of the second embodiment, and the active periods of the third embodiment may be set dynamically by the controller 232 as a function of the current on the bus line 202. In an embodiment, the controller 232 may measure the current passing through the shunt resistor 226 and set the current dissipation period as a function of the instantaneous measured current, e.g. via a look-up table. Table 1 below provides an example of such a look-up table. Here, for any given current range, the current dissipation period may be set by the controller as a number of PWM cycles (e.g., 2 cycles for a current range of 200A to 230A) or a measure of time (e.g., 50 µs for a current range of 200A to 230A). Using this table, the controller 232 does not apply the current dissipation period if the current is less than approximately 200A, and it can actively adjust the current dissipation period based on the current for optimal current control.

**TABLE 1**

| Current Range | Current dissipation period (PWM Cycles) | Current dissipation period (Seconds) |
|---|---|---|
| 0 - 200A | None | None |
| 200A - 230A | 2 cycles | 50 µs |
| 230A - 260A | 3 cycles | 100 µs |
| 260A - 290A | 4 cycles | 150 µs |
| 290A - 320A | 5 cycles | 200 µs |

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "bottom," "lower," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. A tool comprising:
a motor;
a battery interface configured to make an electric connection from a battery;
a power switch circuit disposed between the battery interface and the motor to supply electric power from the battery to the motor, wherein the power switch circuit comprises a plurality of high-side power switches and a plurality of low-side power switches configured as an inverter circuit; and
a controller that controls the power switch circuit to drive the motor using a multi-phase trapezoidal commutation scheme including at least six commutation sectors for each rotation of the motor,
wherein, within at least one phase of the motor that includes a first sector and a second sector and in which the controller controls a pulse-width modulation (PWM) of a first high-side power switch of the plurality of high-side power switches, a dissipation current path is provided through at least two of the plurality of high-side power switches or two of the plurality of low-side power switches, for a current dissipation period that starts immediately after a motor commutation from the first sector to the second sector, for dissipation of the motor current associated with the first sector to avoid negative flow of motor current into a bus line.

2. The tool of claim 1, wherein the current dissipation path is provided through two of the plurality of low-side power switches.

3. The tool of claim 2, wherein the controller is configured to:
extend a drive signal of a low-side power switch of the plurality of power switches that is actively driven during the first sector into the second sector for the duration of the current dissipation period, and/or
increase a conduction band of a low-side power switch of the plurality of power switches that is actively driven during the first sector, so it overlaps with the second sector for the duration of the current dissipation period.

4. The tool of claim 3, wherein the controller is configured to:
continue the PWM control of the first high-side power switch to energize the motor via current from the battery concurrent with the current dissipation period; or
temporarily pause the PWM control of the first high-side power switch for the duration of the current dissipation period and resume the PWM control within the second sector after an expiration of the current dissipation period; optionally wherein the controller is configured to activate a drive signal of a low-side power switch of the plurality of power switches that is associated with the second sector after the expiration of the current dissipation period.

5. The tool of claim 1, wherein the current dissipation path is provided through two of the plurality of high-side power switches.

6. The tool of claim 5, wherein the controller is configured to:
extend an ON-cycle of one of first high-side power switch for the duration of the current dissipation period, and/or
temporarily set a PWM duty cycle of the first high-side power switch to 100% for the duration of the current dissipation period, and to resume normal control of the PWM duty cycle after an expiration of the current dissipation period.

7. The tool of any preceding claim, wherein the controller is configured to measure a current passing between the battery and the power switch circuit and set the current dissipation period as a function of the measured current.

8. A method of controlling a tool having a motor powered by a battery, a controller, and a power switch circuit that supplies electric power from the battery to the motor, wherein the power switch circuit comprises a plurality of high-side power switches and a plurality of low-side power switches configured as an inverter circuit, the method comprising:
controlling the power switch circuit to drive the motor using a multi-phase trapezoidal commutation scheme including at least six commutation sectors for each rotation of the motor; and
controlling the power switch circuit to provide a dissipation current path, within at least one phase of the motor that includes a first sector and a second sector and in which a first high-side power switch of the plurality of high-side power switches is activated via a pulse-width modulation (PWM) control, through at least two of the plurality of high-side power switches or two of the plurality of low-side power switches, for a current dissipation period that starts immediately after a motor commutation from the first sector to the second sector, for dissipation of the motor current associated with the first sector to avoid negative flow of motor current into a bus line.

9. The method of claim 8, wherein the current dissipation path is provided through two of the plurality of low-side power switches.

10. The method of claim 9, wherein controlling the power switch circuit to provide a dissipation current path comprises extending a drive signal of a low-side power switch of the plurality of power switches that is actively driven during the first sector into the second sector for the duration of the current dissipation period.

11. The method of claim 10, further comprising:
continuing the PWM control of the first high-side power switch to energize the motor via current from the battery concurrent with the current dissipation period, or
temporarily pausing the PWM control of the first high-side power switch for the duration of the current dissipation period; and resuming the PWM control within the second sector after an expiration of the current dissipation period; optionally wherein the method further comprises activating a drive signal of a low-side power switch of the plurality of power switches that is associated with the second sector after the expiration of the current dissipation period.

12. The method of claim 8, wherein the current dissipation path is provided through two of the plurality of high-side power switches.

13. The method of claim 12, wherein controlling the power switch circuit to provide a dissipation current path comprises: temporarily setting a PWM duty cycle of the first high-side power switch to 100% for the duration of the current dissipation period; and resuming normal control of the PWM duty cycle after an expiration of the current dissipation period.

14. The method of any of claims 8 to 13, further comprising: measuring a current passing between the battery and the power switch circuit; and setting the current dissipation period as a function of the measured current.
